# EUROPÄISCHE PATENTSCHRIFT

(11) **EP 4 519 058 B1**
(45) Veröffentlichungstag und Bekanntmachung des Hinweises auf die Patenterteilung: **15.04.2026**
(21) Anmeldenummer: 24723856.1
(22) Anmeldetag: 02.05.2024
(51) Int. Cl.: B29C 45/64

(54) **FORMSCHLIESSEINHEIT UND VERFAHREN ZUM BETREIBEN DERSELBEN**
MOULD CLOSING UNIT AND METHOD FOR OPERATING THE SAME
UNITÉ DE FERMETURE DE MOULE ET SON PROCÉDÉ DE FONCTIONNEMENT

(30) Priorität: 05.05.2023 DE 102023111740
(43) Veröffentlichungstag der Anmeldung: 12.03.2025
(73) Patentinhaber: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)
(86) Internationale Anmeldenummer: PCT/EP2024/062168
(87) Internationale Veröffentlichungsnummer: WO 2024/231235

(56) Entgegenhaltungen:
- EP-A1- 0 164 419
- CA-A1- 2 814 890
- DE-B3- 102015 109 840

## Beschreibung

Die vorliegende Erfindung betrifft eine Formschließeinheit für eine Maschine zur Verarbeitung von Kunststoffen und anderer plastifizierbarer Masen, insbesondere für eine Spritzgießmaschine nach dem Oberbegriff des Anspruchs 1 sowie ein Verfahren zum Betreiben einer Formschließeinheit nach dem Oberbegriff des Anspruchs 9.

Wenn hier von "Werkzeug" oder "Form" die Rede ist, handelt es sich um ein Spritzgießwerkzeug oder eine Spritzgießform, wie sie üblicherweise zwischen den Formträgern einer Formschließeinheit einer Maschine zur Verarbeitung von Kunststoffen aufgenommen wird. Die Begriffe "Werkzeug", "Form", "Spritzgießwerkzeug" oder "Spritzgießform" werden daher synonym verwendet.

In der Spritzgießtechnik werden verschiedene Formschließeinheiten mit unterschiedlichen Schließkraftbereichen verwendet. Beispielsweise sind im Schließkraftbereich bis 2000 kN überwiegend 5-Punkt-Kniehebel mit einem nach innen öffnenden Kniehebelstrang bekannt. Z.B sind in der EP 0 164 419 A1 oder der DE 10 2015 109 840 B3 Schließeinheiten mit nach innen klappenden Kniehebelsträngen offenbart.

Diese Kniehebelsysteme werden in der Regel mit vier Kniehebelsträngen ausgeführt, welche zwischen der beweglichen Formaufspannplatte und dem Abstützträger platziert sind. Die Stränge werden über einen Kreuzkopf mit den Hilfs- bzw. Stellhebeln verbunden und zum Beispiel mittels eines Elektromotors und eine Spindel horizontal bewegt. Beim Einsatz von beispielsweise vier Haupthebeln kommt es beim Aufbau der Schließkraft zu einer Verformung der Anlenkpunkte auf der Werkzeugplatte bzw. der Abstützplatte, was zu einer Torsion der Haupthebel und somit zu einer Kantenbelastung in den Drehlagern führt. Die Lagerung der Antriebsplatte ist in der Regel immer in die Verstellplatte integriert und übernimmt die Führung der linearen Bewegung der Antriebsplatte.

Weiter kostet das nach innen Klappen der Kniehebelstränge Platz, wodurch sich wenig Freiraum für weitere Teile der Maschine ergibt. Ebenfalls wird entsprechend viel Material für die Ausgestaltung der Kniehebelstränge verwendet was Ressourcen kostet.

Aus der US 4 545 757 A ist eine Spritzgießmaschine mit einer Trägerplatte und einer beweglichen Platte eines Formschließmechanismus bekannt. Die Trägerplatte ist mit vier Führungsstangen verbunden und die bewegliche Platte ist an den Führungsstangen beweglich geführt.

Eine zentrale Stange führt mit einem Ende einen beweglichen Querarm und ist mit einem anderen Ende in der Trägerplatte beweglich gelagert. Zwei Kniehebelstränge sind jeweils in ihrer Mitte mit dem beweglichen Querarm verbunden. Trägerplatte und bewegliche Platte sind jeweils mit einem Ende der beiden Kniehebelstränge verbunden. Die bewegliche Platte wird mittels eines hydraulischen Antriebs, der den beweglichen Querarm und damit die Kniehebelstränge antreibt, auf den Führungsstangen bewegt. Im geöffneten Zustand der Form klappen die Kniehebel nach innen, im gestreckten Zustand liegen die Kniehebelpunkte (und die Kraftlinie) außerhalb der Führungsstangen bzw. Holme. Die Krafteinleitungspunkte liegen geometrisch bedingt so weit außen, dass sich beim Klappen nach innen der notwendige Freiraum ergibt, damit die Kniehebel ohne Kollision aneinander vorbei schwenken können. Durch die außen liegenden Krafteinleitungspunkte wird der durch die Formträger bzw. Werkzeugplatte gebildete Biegebalken groß und bauartbedingt ist viel Material in die Werkzeugplatten zu investieren, um auf der Werkzeugaufspannfläche die gleiche Verformung zu generieren wie bei einem nach außen klappenden System. Eine mittige Führung, die an der Werkzeugplatte beweglich befestigt ist, lagert den Kreuzkopf und ist zusätzlich in der hinteren Trägerplatte nochmals gelagert. Diese Einzelführung hält den Kreuzkopf in zentraler Position.

In der JP H07-205237 A ist eine Drei-Platten-Formschließeinheit offenbart, bei der eine hintere Platte und eine bewegliche Platte durch einen Werkzeugschließmechanismus verbunden sind. Die Formschließeinheit umfasst eine Werkzeugschließantriebsvorrichtung und einen Kniehebelstrang. Die Werkzeugschließantriebsvorrichtung ist mit einer Kugelumlaufspindel/- mutter und einem Formschließmotor ausgestattet. Das hintere Ende des Kniehebelstrangs ist schwenkbar an der hinteren Platte gelagert und mit dieser verbunden. Das vordere Ende des Kniehebelstrangs ist mit der beweglichen Platte verbunden und das Mittelteil des Kniehebelstrangs ist mit einem Kreuzkopf verbunden. Der Kreuzkopf ist in seiner Längsbewegung durch eine Führungsstange geführt, die parallel zu einem Holm zwischen der beweglichen Platte und der hinteren Platte angeordnet und mit der beweglichen Platte verbunden ist.

Die CA 2 814 890 A1 offenbart eine Spritzgießmaschine zur Verarbeitung von Kunststoffen, die an einer Formschließeinheit mindestens eine Spritzgießform aufweist, die zwischen einem feststehenden Formträger und einem beweglichen Formträger aufnehmbar ist. Die Formträger werden mittels mindestens eines Kniehebelpaares mit zwei Kniehebelmechanismen bewegt, die unabhängig voneinander jeweils von einer Antriebseinheit in einer Schließrichtung angetrieben werden und auf einer Lagerplatte gelagert sind. Da die Lagerplatte entlang von Führungen beweglich an der Spritzgießmaschine gelagert ist und die Antriebseinheiten an der beweglichen Lagerplatte montiert sind, an der die Betätigungselemente für die mindestens zwei Kniehebelmechanismen angebracht sind, kann die Parallelität der Formenträger sowohl im statischen als auch im dynamischen Zustand beeinflusst werden.

Ausgehend von diesem Stand der Technik liegt der vorliegenden Erfindung die Aufgabe zugrunde, eine vorteilhaft möglichst ressourcenschonende und verlässliche Lösung einer Formschließeinheit bereitzustellen.

Diese Aufgabe wird durch eine Formschließeinheit mit den Merkmalen des Anspruchs 1 sowie durch ein Verfahren zum Betreiben einer Formschließeinheit mit den Merkmalen des Anspruchs 9 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit für eine Maschine zur Verarbeitung von Kunststoffen und anderer plastifizierbare Massen, insbesondere für eine Spritzgießmaschine, weist eine erste Formaufspannplatte, bevorzugt eine stationäre Formaufspannplatte, eine Abstützplatte, eine bewegliche Formaufspannplatte und eine Antriebsplatte auf, wobei die Antriebsplatte zwischen der beweglichen Formaufspannplatte und der Abstützplatte angeordnet ist. Wenigstens zwei Kniehebelstränge, bevorzugt genau zwei Kniehebelstränge, sind mit der Abstützplatte, der Antriebsplatte und der beweglichen Formaufspannplatte verbunden, wobei sich die Kniehebelstränge an der Abstützplatte abstützen und nach außen über Holme der Formschließeinheit hinaus klappende Kniehebelstränge sind. Mit nach "außen" klappen ist gemeint, dass sich die Kniehebelstränge beim Öffnen des Spritzgießwerkzeugs ausgehend von der Maschinen-Mittelachse, welche parallel entlang der Holme durch die erste Formaufspannplatte, die bewegliche Formaufspannplatte und die Abstützplatte verläuft, z.B. nach oben, unten, rechts und/oder links öffnen und sich dabei über die von den Holmen bei einer Projektion entlang einer Achse in Schließrichtung aufgespannten Fläche hinaus erstrecken. Beispielsweise können die Kniehebelstränge nach unten in Richtung des Maschinenständers und in die entgegengesetzte Richtung nach oben über die Holme hinaus klappen. Hinsichtlich ihrer Anlenkung sind innerhalb eines durch die Holme begrenzten Raums und von den Grenzen des Raums beabstandet nach innen in Richtung auf die Maschinen-Mittelachse angeordnet. Dadurch wird vorteilhaft eine optimale Krafteinleitung in die bewegliche Formaufspannplatte gewährleistet, so dass diese konstruktiv optimiert werden kann. Der Materialeinsatz wird so bei gleicher Steifigkeit deutlich reduziert. Vorteilhaft können gleichzeitig durch das Klappen nach außen größere Hübe realisiert werden, da die Hebel aus der optimalen Position nach außen klappen, so dass die Hebel nicht in Kollision kommen.

Für eine vorteilhaft ressourcenschonende und verlässliche Formschließeinheit ist wenigstens eine Führungsstange, bevorzugt zwei Führungsstangen, mit der beweglichen Formaufspannplatte verbunden und relativ bewegbar zu der Abstützplatte. Die Abstützplatte weist wenigstens eine Ausnehmung für die wenigstens eine Führungsstange auf. Die Ausnehmung kann z.B. als eine Aussparung oder als ein Loch in der Abstützplatte ausgeführt sein. Die wenigstens eine Führungsstange hat die Funktion, ein präzises Öffnen und Schließen der Formschließeinheit durch eine präzise Führung der Antriebsplatte zu gewährleisten. Weiter taucht die wenigstens eine Führungsstange beim Öffnen und/oder Schließen der Formschließeinheit wenigstens teilweise, bevorzugt komplett, durch die Abstützplatte. Beispielsweise kann in einem geöffneten Zustand der Formschließeinheit die wenigstens eine Führungsstange komplett durch die Ausnehmung und die Abstützplatte hindurch ragen. Möglich ist z.B. aber auch, dass im geöffneten Zustand die wenigstens eine Führungsstange nicht durch die Abstützplatte ragt, sondern ein Ende der wenigstens einen Führungsstange in der wenigstens einen Ausnehmung der Abstützplatte endet.

Prinzipiell denkbar ist auch, dass sich der wenigstens eine Kniehebelstrang an der ersten Formaufspannplatte abstützt und somit der Kniehebelstrang die bewegliche Formaufspannplatte zieht, wodurch sich ein ziehender Typ der Formschließeinheit ergibt. Die bewegliche Formaufspannplatte wird dann an die erste Formaufspannplatte herangezogen.

Beim Öffnen und/oder Schließen der Formschließeinheit wird die Antriebsplatte über einen Antrieb, z.B. einen hydraulischen Antrieb oder bevorzugt einen elektrischen Antrieb, z.B. einen Spindelantrieb oder einen Zahnstangenantrieb, in Bewegung gesetzt, wodurch die Kniehebelstränge betätigt werden und die bewegliche Formaufspannplatte in Bewegung gesetzt wird. Wird die Form geöffnet, bewegen sich die Antriebsplatte und die bewegliche Formaufspannplatte auf die Abstützplatte zu, wobei die wenigstens eine Führungsstange wenigstens teilweise, bevorzugt komplett, durch die Abstützplatte taucht. Beispielsweise kann im geöffneten Zustand der Formschließeinheit die wenigstens eine Führungsstange komplett durch die Abstützplatte verlaufen, sodass die wenigstens eine Führungsstange komplett in der Abstützplatte aufgenommen ist und durch die Abstützplatte in entgegengesetzter Richtung der beweglichen Formaufspannplatte hinausragt. Dafür weist die Abstützplatte wenigstens eine Ausnehmung auf, durch welche die wenigstens eine Führungsstange wenigstens teilweise, bevorzugt komplett im geöffneten Zustand der Form ragt.

Die Kniehebelstränge bilden zwischen sich einen Freiraum aus, der sich vorteilhaft für die Anordnung der Führungsstange und/oder für den Einbau von Peripherie (z. B. den Auswerfer) nutzen lässt.

Zur vorteilhaften optimalen Kraftübertragung und Krafteinleitung in die bewegliche Formaufspannplatte sind die Kniehebel der Kniehebelstränge in Strecklage horizontal ausgerichtet und gleichzeitig konstruktiv so weit nach innen gezogen, dass eine optimale Krafteinleitung erreicht wird.

Die wenigstens eine Führungsstange verläuft durch die Antriebsplatte und ist wenigstens teilweise in der Antriebsplatte und/oder in der Abstützplatte gelagert. Vorteilhaft ergibt sich so eine geschwindigkeitsreduzierte Lagerung der Antriebsplatte sowie eine ressourcenschonende Lageranordnung. Weiter vorteilhaft wird jeweils durch die Lagerung der Führungsstange in der Antriebsplatte und/oder Abstützplatte der Bewegungsablauf der Öffnungs- und/oder Schließbewegung der Formschließeinheit stabilisiert.

Bevorzugt nimmt die Ausnehmung wenigstens teilweise die Führungsstange auf und lagert diese. Wird die Form geschlossen, wird die Antriebsplatte mittels des Antriebs in Bewegung gesetzt und Antriebsplatte und bewegliche Formaufspannplatte bewegen sich auf die erste Formaufspannplatte zu. Die wenigstens eine Führungsstange bewegt sich ebenfalls in Richtung der ersten Formaufspannplatte. Dabei taucht die wenigstens eine Führungsstange nun in Richtung der beweglichen Formaufspannplatte wenigstens teilweise aus der Abstützplatte heraus und/oder fährt beim Schließen der Formschließeinheit wenigstes teilweise aus der Abstützplatte heraus. Bevorzugt verläuft die Führungsstange im geschlossenen Zustand der Formschließeinheit wenigstens teilweise, weiter bevorzugt komplett, durch die Abstützplatte und ist dort zumindest teilweise gelagert, ragt jedoch weiter bevorzugt nicht mehr über die Abstützplatte heraus. Denkbar ist jedoch auch, dass die Führungsstange auch im geschlossenen Zustand der Formschließeinheit durch oder über die Abstützplatte hinausragt. Prinzipiell denkbar ist auch, dass je nach Hub der Formschließeinheit die Führungsstange bei geöffneter und/oder geschlossener Form lediglich teilweise durch die Abstützplatte verläuft und nicht über die gesamte Dicke der Abstützplatte aufgenommen ist oder durch die Abstützplatte ragt.

Ein nach außen klappender Kniehebelstrang erfordert in der Regel eine in seinen Abmaßen recht große Antriebsplatte, weil die Hilfshebel nach außen gezogen werden müssen. Um vorteilhaft eine möglichst kompakte Antriebsplatte zu realisieren, muss die Führung der Antriebsplatte so platziert werden, dass eine stehende Führung, welche der beweglichen Formaufspannplatte zugeordnet ist, platztechnisch nur zu realisieren ist, wenn diese in die Baulänge der Konstruktion eingeht. Um dies zu vermeiden, ist die Führungsstange der beweglichen Formaufspannplatte beweglich zugeordnet und in der Gesamtkonstruktion so angeordnet, dass die Führungsstange durch die Abstützplatte durchtauchen kann (und dort geführt wird), was somit vorteilhaft im Hinblick auf den Materialeinsatz eine ressourcenschonende Lösung darstellt.

Durch die mitfahrende Führungsstange ergeben sich für die Gleitgeschwindigkeiten der Lager bzw. Führungen relative Profile, die aufgrund der Kniehebelkinematik zu einer reduzierten Gleitbelastung der Führungssysteme führen. Die durchtauchende Führungsstange ermöglicht vorteilhaft eine optimale Führung der Antriebsplatte mit den nach außen öffnenden Kniehebelsträngen bei gleichzeitig minimalstem Materialeinsatz. Weiter ergeben sich in Kombination mit dem nach außen klappenden Kniehebelsystem große Öffnungshübe bei gleichzeitig minimalstem Materialeinsatz und idealem Krafteinleitungspunkt an der beweglichen Formaufspannplatte sowie ein großer Freiraum zum Beispiel für einen Auswerfer.

Für eine vorteilhaft einfache geometrische Lösung ist bevorzugt die wenigstens eine Führungsstange, weiter bevorzugt genau eine Führungsstange, mit der Mitte der beweglichen Formaufspannplatte verbunden. Beispielsweise ist dies hinsichtlich einer optimalen Krafteinwirkung insbesondere für den Fall vorteilhaft, dass alle relevanten Funktionseinheiten (z.B. ein Auswerfer und/oder eine Antriebseinheit) in der zentralen Position der beweglichen Formaufspannplatte eliminiert sind.

Für eine vorteilhaft reduzierte Gleitbelastung der Führungssysteme weisen bevorzugt die wenigstens eine Führungsstange und die bewegliche Formaufspannplatte einerseits und die Antriebsplatte andererseits während des Öffnens und/oder Schließens der Formschließeinheit wenigstens zeitweise ein gemeinsames Geschwindigkeitsprofil auf. Bei dem Geschwindigkeitsprofil handelt es sich um eine Überlagerung einer Bewegung, bevorzugt einer konstanten Bewegung eines Antriebs, z.B. einer Spindel- oder Zahnstangenbewegung mit der Kniehebelkinematik.

Bevorzugt bewegen sich während des Öffnens und/oder Schließens der Formschließeinheit die wenigstens eine Führungsstange und die bewegliche Formaufspannplatte über wenigstens eine Zeitspanne mit einer gleichen oder mit einer zumindest zu einem Zeitpunkt identischen Geschwindigkeit wie die Antriebsplatte. Vorteilhaft werden dadurch Reibungen und somit Verschleiß bezüglich der Führungsstange sowie der Antriebsplatte bzw. bezüglich der entsprechenden Lagerungen und Führungen reduziert. Weiter vorteilhaft führt dies zu einem schmierstellenreduzierten Kniehebel-Formschluss. Da die Reibungskraft proportional zu der Geschwindigkeit V bzw. abhängig von V² ist, verringert sich vorteilhaft die Reibung, wodurch der Verschleiß minimiert wird. Beispielsweise wird die Lagerung der Führungsstange, z.B. ein Gleitlager, bei einer Relativgeschwindigkeit gleich Null nicht beansprucht.

Bevorzugt ist während des Öffnens und/oder Schließens der Formschließeinheit die Geschwindigkeit der Antriebsplatte über wenigstens eine Zeitspanne im Wesentlichen konstant. Vorteilhaft führt dies zu einer ressourcenschonenden Lagerung, da durch Geschwindigkeitsänderungen entsprechende Reibungen beispielsweise an der Führungsstange auftreten.

Vorteilhaft für eine Reduktion der Torsionseinflüsse auf die Kniehebeldrehgelenke sind wenigstens zwei Kniehebelstränge, weiter bevorzugt genau zwei Kniehebelstränge, mit jeweils einem Ende mittig, bevorzugt horizontal mittig, und/oder vertikal symmetrisch an der beweglichen Formaufspannplatte angreifend angeordnet sind. Weiter bevorzugt können die anderen Enden der Kniehebelstränge mittig, bevorzugt horizontal mittig, und/oder vertikal symmetrisch an der Abstützplatte angreifend angeordnet sein. Horizontal mittig bedeutet beispielsweise bei einer im Wesentlichen rechteckigen beweglichen Formaufspannplatte, dass die Kniehebelstränge entlang der vertikalen Mittelsenkrechten der beweglichen Formaufspannplatte angeordnet sind - der Abstand nach rechts und links zum Rand der beweglichen Formaufspannplatte ist im Wesentlichen gleich. In diesem Beispiel sind dann die Kniehebelstränge entlang der vertikalen Mittelsenkrechten übereinander bzw. untereinander angeordnet. Vertikal symmetrisch bedeutet in diesem Beispiel, dass die Symmetrie bzgl. der horizontalen Mittelsenkrechten der im Wesentlichen rechteckigen beweglichen Formaufspannplatte als Symmetrieachse besteht und die Kniehebelstränge somit vertikal nach oben und unten im Wesentlichen den gleichen Abstand zur horizontalen Mittelsenkrechten aufweisen. Weiter vorteilhaft ergibt sich hierdurch eine vereinfachte Schließkraftmessung an den Holmen, da diese lediglich als Zuganker dienen. Weiter können die Kniehebelstränge mit dem jeweils anderen Ende mit der Abstützplatte verbunden sein.

Weiter bevorzugt sind genau zwei Kniehebelstränge vorgesehen, wobei die Kniehebelstränge mit jeweils einem Ende horizontal mittig und vertikal symmetrisch in der oberen und unteren Hälfte der beweglichen Formaufspannplatte angreifend angeordnet sind. Beispielsweise begrenzt bei einer im Wesentlichen rechteckigen beweglichen Formaufspannplatte die horizontale Mittelsenkrechte die obere und die untere Hälfte. Die mittige Anordnung der Kniehebelstränge und das Klappen der Kniehebelstränge nach außen bietet infolge der zentralen Krafteinleitung neben einem Freiraum, zum Beispiel für einen zentral platzierbaren Auswerfer, vorteilhaft noch eine optimierte Krafteinleitung von Kniehebelstrang in die bewegliche Formaufspannplatte und schlussendlich in das Werkzeug.

Weiter bevorzugt weisen die genau zwei an der beweglichen Formaufspannplatte horizontal mittigen und vertikal symmetrisch angreifend angeordnete Enden der Kniehebelstränge den kleinstmöglichen Abstand zueinander auf. Die Position, bevorzugt die symmetrische Position, der Enden der Kniehebelstränge kann von einem im Mittelbereich der beweglichen Formaufspannplatte vorgesehenen Einbauteil, z.B. einem Auswerfer abhängig sein. Ohne einen Auswerfer können beispielsweise die einen Enden der Kniehebelstränge horizontal mittig und vertikal symmetrisch in der oberen und unteren Hälfte der beweglichen Formaufspannplatte so angeordnet sein, dass die jeweiligen Enden der Kniehebelstränge direkt aneinander anliegen. Die Enden der Kniehebelstränge sind dann so nah wie möglich aneinander angeordnet und grenzen aneinander an. Beispielsweise können bei einer klassischen zentralen Kavität die Kniehebelstränge maximal zusammengeschoben werden, wobei sich der Kniehebelstrang dann z.B. in einem Abstandsbereich von 0-50% des lichten Holmmaßes befindet. Bei Zwei- oder Mehrkavitäten ist die Position in Verlängerung der äußeren Kavität angeordnet, wobei der Kniehebelstrang sich z.B. in einem Abstandsbereich von 50-100% des lichten Holmmaß befindet. Vorteilhaft erfolgt dadurch ein gleichmäßiger Kraftübertrag bezüglich der kompletten beweglichen Formaufspannplatte.

Bevorzugt liegen die wenigstens zwei Kniehebelstränge, weiter bevorzugt die genau zwei Kniehebelstränge, in einer vertikalen Achse in einem symmetrischen Band von 0-100%, weiter bevorzugt von 20-80% des lichten Holmmaßes.

Weiter bevorzugt sind die an der beweglichen Formaufspannplatte angreifend angeordneten Enden der Kniehebelstränge verschiebbar, weiter bevorzugt stufenlos verschiebbar. Es können bei nach außen klappenden Kniehebelsträngen die an der beweglichen Formaufspannplatte angreifend angeordneten Enden der Kniehebelstränge zusammengeschoben, weiter bevorzugt komplett zusammengeschoben werden, wodurch sich vorteilhaft eine flexible Positionierung der Kniehebelstränge ergibt. Beispielsweise können bei einer im Wesentlichen rechteckigen beweglichen Formaufspannplatte daran horizontal mittig und vertikal symmetrisch angreifend angeordnete Enden der Kniehebelstränge entlang der horizontalen Mittelsenkrechten verschoben werden, weiter bevorzugt stufenlos verschoben werden. Weiter bevorzugt können auch die anderen Enden der Kniehebelstränge, welche mit der Abstützplatte verbunden sind, verschiebbar sein, weiter bevorzugt stufenlos verschiebbar sein. Weiter bevorzugt kann somit auch der komplette Kniehebelstrang verschiebbar sein, noch weiter bevorzugt stufenlos verschiebbar sein.

Bei einer bevorzugten Reduktion der Verwendung von z.B. vier auf zwei Kniehebelstränge wird vorteilhaft die Möglichkeit geschaffen, die Antriebsplatte so zu generieren, dass die Antriebsplatte über eine Führung mittels der Führungsstangen eine nach außen gerichtete Kniehebelbewegung erlaubt, ohne die Gesamtkonstruktion längenbestimmend zu beeinflussen. Neben der vorteilhaften Gewichtseinsparung bei gleicher Steifigkeit der Schließkomponenten von circa 25% ergeben sich für die Belastung der Kniehebeldrehsysteme und die Gleitgeschwindigkeit der Führungssysteme weitere positive Eigenschaften.

Bevorzugt sind wenigstens zwei Führungsstangen, weiter bevorzugt genau zwei Führungsstangen, vorgesehen, welche vorzugsweise mittig, bevorzugt vertikal mittig, und/oder horizontal symmetrisch an der beweglichen Formaufspannplatte angeordnet sind. Während eine einzelne mittige Führung eine Rotation oder ein Verkippen von Kreuzkopf und/oder beweglicher Formaufspannplatte nicht verhindern kann, wird bei mehreren Führungsstangen die Antriebsplatte geführt und kann vorteilhaft durch die Anordnung der Führungsstangen asymmetrisch auftretende Kräfte optimaler kompensieren und sorgt durch die positive Lageausrichtung der Antriebsplatte selbst unter hohen asymmetrischen Kräften dafür, dass sich die Kniehebelanlenkpunkte nicht deformieren und es nicht zu technisch höchst kritischen Kantenträgern im hochbelasteten Kniehebeldrehgelenk kommt. Die Doppel- oder Mehrfachführung verbessert vorteilhaft das Verhalten bei asymmetrischen Kräften.

Vertikal mittig bedeutet beispielsweise bei einer im Wesentlichen rechteckigen beweglichen Formaufspannplatte, dass die Führungsstangen entlang der horizontalen Mittelsenkrechten der beweglichen Formaufspannplatte angeordnet sind und somit nach oben und unten zum Rand der beweglichen Formaufspannplatte im Wesentlichen den gleichen Abstand aufweisen. Horizontal symmetrisch bedeutet in diesem Beispiel, dass die Symmetrie bzgl. der vertikalen Mittelsenkrechten der im Wesentlichen rechteckigen beweglichen Formaufspannplatte als Symmetrieachse besteht und die Führungsstangen somit horizontal nach links und rechts im Wesentlichen den gleichen Abstand zur vertikalen Mittelsenkrechten aufweisen. Aufgrund der sehr kompakten symmetrischen Anordnung der Führungsstangen aus dem Antriebsplattenzentrum heraus, ergeben sich für das thermische Wachstum klare Vorteile, weil dadurch der Abstand der Führung zum Zentrum kleingehalten werden kann. Beispielsweise sind bei einer rechteckigen beweglichen Formaufspannplatte die Führungsstangen entlang der horizontalen Mittelsenkrechten angeordnet und symmetrisch gegenüber der vertikalen Mittelsenkrechten als Symmetrieachse. Bevorzugt weisen die wenigstens zwei Führungsstangen jeweils den kleinstmöglichen Abstand zum Zentrum der Antriebsplatte und/oder der beweglichen Formaufspannplatte auf, wodurch sich Vorteile hinsichtlich der thermischen Eigenschaften der Führungsstangen ergeben. Thermisches Wachstum hängt physikalisch vom Temperatureinfluss und der Länge L ab, d.h. je näher die Führungsstangen beieinander sind, umso kleiner ist die freie Länge L und somit natürlich auch die Auslenkung der Führungsstangenbohrung von der Idealposition. Je zentrumsnäher die Führungsstangen und Führungsstangenbohrungen platziert sind, umso kleiner ist das thermische Wachstum und somit die Positionsabweichung der Führungsstangenbohrungen zur Idealposition.

Weiter bevorzugt liegen die wenigstens zwei Führungsstangen, bevorzugt die genau zwei Führungsstangen, in einem horizontal symmetrischen Band von 0-100%, bevorzugt 20-80% des lichten Holmmaßes, wobei weiter bevorzugt ein Führungsstangenabstand von 0-100%, bevorzugt 20-80% des lichten Holmmaßes für ein präzise und stabile Führung vorteilhaft ist.

Vorteilhaft für eine Erweiterung der Möglichkeiten der Formschließeinheit ist bevorzugt die wenigstens eine Führungsstange Teil einer Schließhubsicherung. Bevorzugt bietet die durchtauchende Führungsstange neben den Führungsaufgaben noch weitere Möglichkeiten weitere Funktionen wie zum Beispiel eine mechanische Schließhubsicherung, zum Beispiel eine Rammstange, zu integrieren.

Bevorzugt sind wenigstens zwei Kniehebelstränge und wenigstens zwei Führungsstangen vorgesehen, welche an der beweglichen Formaufspannplatte, der Abstützplatte und/oder der Antriebsplatte im rechten Winkel zueinander angeordnet sind. Die Anordnung im rechten Winkel ist so zu verstehen, dass z.B. an der beweglichen Formaufspannplatte zwei Führungsstangen horizontal symmetrisch und vertikal mittig angeordnet sind, während die Kniehebelstränge entsprechend im rechten Winkel dazu, also horizontal mittig und vertikal symmetrisch angeordnet sind. Verbindet man z.B. die Anordnungspunkte der Kniehebelstränge an der beweglichen Formaufspannplatte als auch die Verbindungspunkte der Führungsstangen an der beweglichen Formaufspannplatte miteinander, so schneiden sich die Verbindungen in einem im Wesentlichen rechten Winkel. Dadurch ergibt sich vorteilhaft eine direkte Krafteinleitung in das Werkzeug bei gleichzeitig stabiler Lagerung.

Weiter bevorzugt sind genau zwei Kniehebelstränge und genau zwei Führungsstangen vorgesehen, welche an der beweglichen Formaufspannplatte, der Abstützplatte und/oder der Antriebsplatte im rechten Winkel zueinander angeordnet sind. Verbindet man beispielsweise die Anordnungspunkte der zwei Kniehebelstränge mit einer Linie miteinander sowie die Anordnungspunkte der zwei Führungsstangen mit einer Linie miteinander, so schneiden sich die beiden Verbindungslinien in einem rechten Winkel. Vorteilhaft ergeben sich dadurch Materialeinsparungen bei gleichzeitig ausreichender und stabiler Krafteinleitung in das Werkzeug.

Die Aufgabe wird zudem durch ein Verfahren zum Betreiben einer Formschließeinheit für eine Maschine zur Verarbeitung von Kunststoffen und anderer plastifizierbarer Massen, insbesondere für eine Spritzgießmaschine, mit den Merkmalen des Anspruches 12 gelöst. Es ergeben sich so Vorteile hinsichtlich Materialeinsatz sowie eines ressourcenschonenden Betriebs, da die Formschließeinheit aufgrund der beweglichen Führung kompakter ausgeführt werden kann. Dazu wird die bewegliche Formaufspannplatte von den Kniehebelsträngen innerhalb eines durch die Holme begrenzten Raums und von den Grenzen des Raums beabstandet nach innen in Richtung auf eine Maschinen-Mittelachse betätigt, wobei die Kniehebelstränge zwischen sich einen Freiraum ausbilden und die Kniehebel der Kniehebelstränge in Strecklage horizontal ausgerichtet sind und wobei die wenigstens eine Führungsstange durch die Antriebsplatte verläuft und wenigstens teilweise in der Antriebsplatte und/oder in der Abstützplatte gelagert ist.

Bevorzugt werden während des Öffnens und/oder Schließens der Formschließeinheit die wenigstens eine Führungsstange und die bewegliche Formaufspannplatte über wenigstens eine Zeitspanne mit der gleichen Geschwindigkeit wie die Antriebsplatte bewegt. Vorteilhaft ergeben sich so Vorteile im Hinblick auf Sicherheit und Verschleiß, da durch verschiedene Geschwindigkeiten Reibungen z.B. an der Führungsstange auftreten, welche nachteilig bezüglich der entsprechenden Lagerungen und Führungen sind. Weiter vorteilhaft führt dies zu einem schmierstellenreduzierten Kniehebel-Formschluss.

Werden Geschwindigkeiten geändert, kommt es aufgrund der Reibung für die notwendige Beschleunigung zu einem nachteiligen Verschleiß der von der Reibung betroffenen Elementen.

Um Vorteile im Hinblick auf Reibung und den damit einhergehenden Verschleiß zu erreichen, wird während des Öffnens und/oder Schließens der Formschließeinheit die Antriebsplatte über wenigstens eine Zeitspanne mit einer im Wesentlichen konstanten Geschwindigkeit bewegt.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung an Hand von in den beigefügten Figuren dargestellten Ausführungsbeispielen näher erläutert. Es zeigen:
- Figur 1: isometrische Ansicht von links einer Maschine zur Verarbeitung von Kunststoffen und anderer plastifizierbarer Massen (Werkzeug geschlossen),
- Figur 2: isometrische Ansicht von links einer Maschine gemäß Fig. 1 (Werkzeug geöffnet),
- Figur 3: isometrische Ansicht von rechts der Maschine gemäß Fig. 1 (Werkzeug geschlossen),
- Figur 4: isometrische Ansicht von rechts der Maschine gemäß Fig. 3 (Werkzeug geöffnet),
- Figur 5: vertikaler Schnitt durch die Maschinenlängsachse (Werkzeug geschlossen),
- Figur 6: horizontaler Schnitt durch die Maschine (Werkzeug geschlossen),
- Figur 7: horizontaler Schnitt durch die Maschine (Werkzeug geöffnet),
- Figur 8: seitliche Ansicht einer Formschließeinheit,
- Figur 9: Schnitt entlang der Achse D-D gemäß Figur 8 durch Hilfs- bzw. Stellkniehebel,
- Figur 10: ein Diagramm der Geschwindigkeit v von Werkzeugplatte bzw. beweglicher Formaufspannplatte und Antriebsplatte über der Zeit t.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

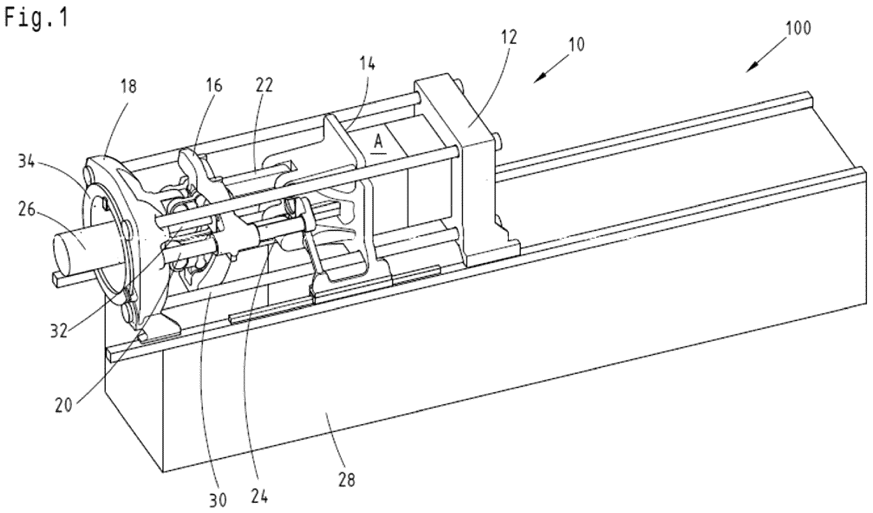

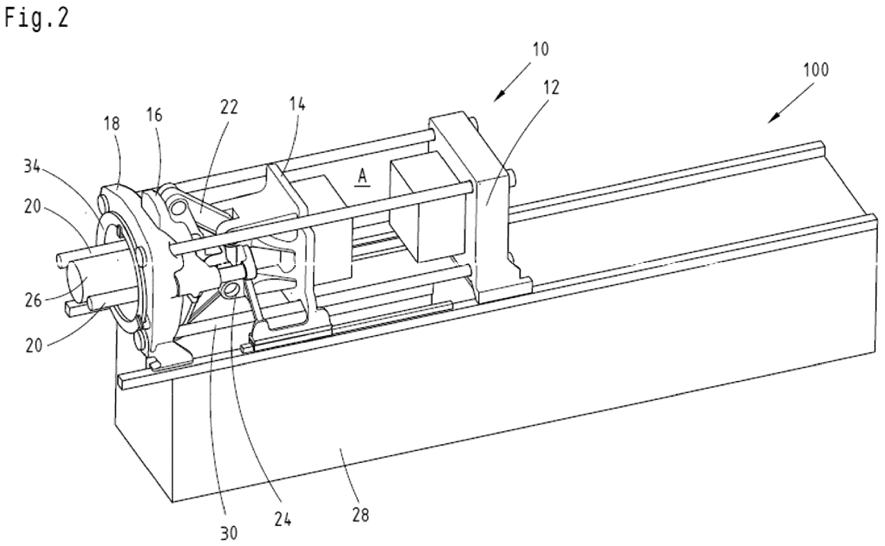

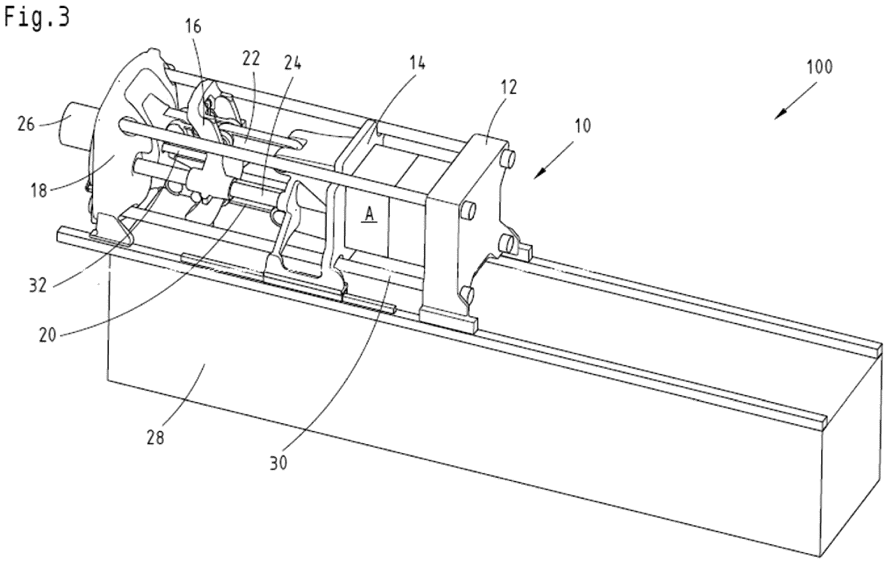

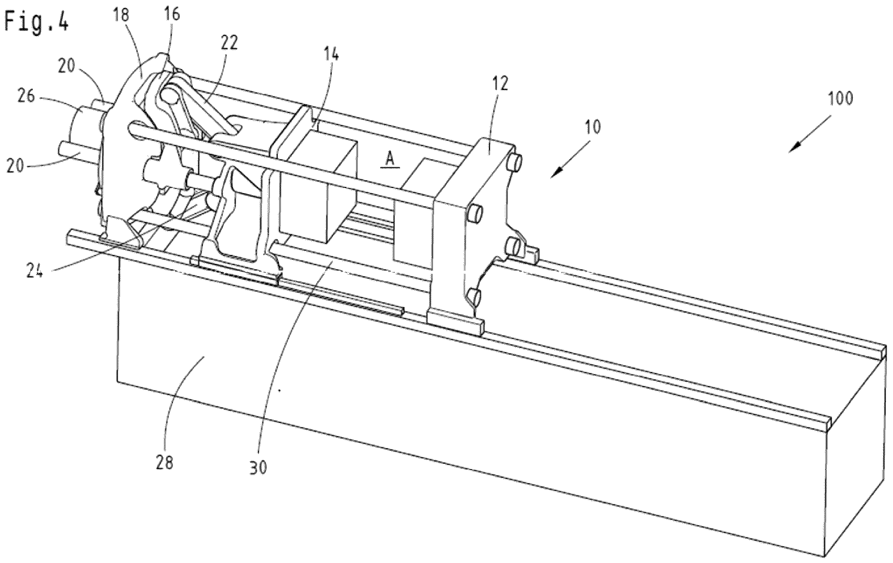

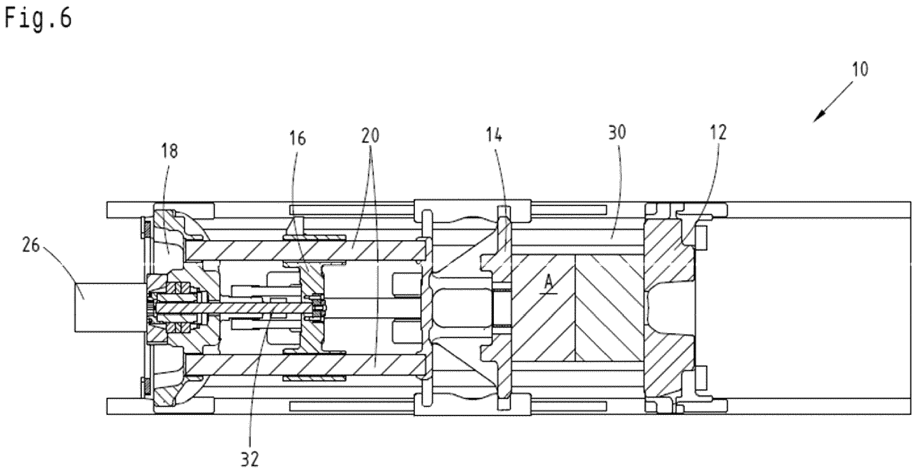

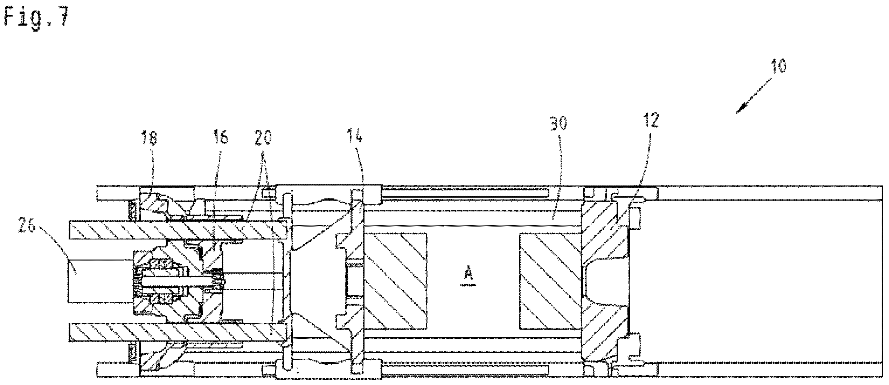

Das Ausführungsbeispiel gemäß den Figuren 1, 3, 5, 6, 8 und 9 zeigt eine Maschine 100 zur Verarbeitung von Kunststoffen und anderer plastifizierbarer Massen, insbesondere eine Spritzgießmaschine, welche eine (nicht dargestellte) Spritzeinheit und eine Formschließeinheit 10 in einem geschlossenen (Spritzgieß-)Werkzeugzustand aufweist, in verschiedenen Ansichten. Die Figuren 2, 4 und 7 zeigen die Maschine 100 bzw. die Formschließeinheit 10 in einem geöffneten Werkzeugzustand in verschiedenen Ansichten. Die Formschließeinheit 10 und/oder die Spritzeinheit können auf einem Maschinenständer 28 angeordnet sein. Die Formschließeinheit 10 ist in Figur 1 z.B. auf der linken Seite mit einem Werkzeugraum A für ein Werkzeug und die (nicht dargestellte) Spritzeinheit ist auf der rechten Seite angeordnet.

Die Formschließeinheit 10 weist eine erste Formaufspannplatte 12, in Figur 1 eine stationäre Formaufspannplatte, eine bewegliche Formaufspannplatte 14, eine Abstützplatte 18 und eine Antriebsplatte 16 auf, welche zwischen der beweglichen Formaufspannplatte 14 und der Abstützplatte 18 angeordnet ist. Die Formschließeinheit 10 weist in den Figuren 1 - 9 Holme 30 auf, welche die Abstützplatte 18 und die erste Formaufspannplatte 12 verbinden. Mehrere Kniehebelstränge 22, 24, in Figur 1 zwei Kniehebelstränge 22, 24, sind mit der Abstützplatte 18, der Antriebsplatte 16 und der beweglichen Formaufspannplatte 14 verbunden, wobei sich die Kniehebelstränge 22, 24 an der Abstützplatte 18 abstützen und als nach außen klappende Kniehebelstränge 22, 24 ausgeführt sind. Dabei klappen die Kniehebelstränge 22, 24 beim Öffnen des Spritzgießwerkzeugs ausgehend von der Maschinen-Mittelachse (Achse 40) nach außen z.B. nach oben, unten, rechts und/oder links und zwar über die von den Holmen 30 bei einer Projektion der Mittelachse in Schließrichtung aufgespannten Fläche hinaus. Beispielsweise können die Kniehebelstränge nach unten in Richtung des Maschinenständers und in die entgegen gesetzte Richtung nach oben über die Holme hinaus klappen.

Hinsichtlich der Anlenkung der Kniehebelstränge 22, 24 sind die Anlenkungspunkte an der beweglichen Formaufspannplatte 14 innerhalb eines durch die Holme 30 begrenzten Raums und von den Grenzen des Raums beabstandet nach innen in Richtung auf die Achse 40 angeordnet. Dadurch wird vorteilhaft eine optimale Krafteinleitung in die bewegliche Formaufspannplatte 14 gewährleistet, so dass diese konstruktiv optimiert werden kann. Der Materialeinsatz wird so bei gleicher Steifigkeit deutlich reduziert. Vorteilhaft können gleichzeitig durch das Klappen nach außen größere Hübe realisiert werden, da die Kniehebel aus der optimalen Position aus der Strecklage nach außen klappen, so dass die Hebel nicht in Kollision kommen.

Diese Anordnung führt dazu, dass die Kniehebelstränge 22, 24 zwischen sich einen Freiraum ausbilden, der sich vorteilhaft für die Anordnung der Führungsstange 20 und/oder für den Einbau von Peripherie (z. B. den Auswerfer) nutzen lässt.

Zur vorteilhaften optimalen Kraftübertragung und Krafteinleitung in die bewegliche Formaufspannplatte sind die Kniehebel der Kniehebelstränge in Strecklage horizontal ausgerichtet sind und gleichzeitig konstruktiv so weit nach innen gezogen, dass ein optimale Krafteinleitung erreicht wird.

Die Antriebsplatte 16 wird über einen Antrieb 26, zum Beispiel einen Spindelantrieb, einen Zahnstangenantrieb oder einen hydraulischen Antrieb sowie über eine Antriebsstange 32, z.B. eine Spindel, eine Zahnstange oder einen Kolben angetrieben und bewegt. Wenigstens eine Führungsstange 20, in Figur 1 zwei Führungsstangen 20, sind mit der beweglichen Formaufspannplatte 14 verbunden und relativ zu der Abstützplatte 18 bewegbar. Weiter weist die Abstützplatte 18 wenigstens eine Ausnehmung, in Figur 1 zwei Ausnehmungen für die zwei Führungsstangen 20 auf, wobei die Führungsstangen 20 beim Öffnen und/oder Schließen der Formschließeinheit 10 wenigstens teilweise, bevorzugt komplett durch die Abstützplatte 18 tauchen. Optional kann die Formschließeinheit 10 eine Formhöhenverstellung 34 an der Abstützplatte 18 aufweisen.

Während des Öffnungs- und/oder Schließvorgangs der Formschließeinheit 10 wird die Antriebsplatte 16 über den Antrieb 26 und die Antriebsstange 32 in Bewegung gesetzt, wodurch die Kniehebelstränge 22, 24 betätigt werden und die bewegliche Formaufspannplatte 14 sowie die Führungsstangen 20 in Bewegung gesetzt werden. Beispielsweise verlaufen die Führungsstangen 20 im geschlossenen Zustand der Formschließeinheit 10 gemäß Figur 1 wenigstens teilweise, bevorzugt komplett, durch die Abstützplatte 18, ragen jedoch nicht mehr aus der Abstützplatte 18 heraus. Die Führungsstangen 20 können über die gesamte Dicke oder über einen Teil der Dicke in der Abstützplatte 18 verlaufen. Denkbar ist jedoch auch, dass die Führungsstangen 20 auch im geschlossenen Zustand der Formschließeinheit 10 durch die Abstützplatte 18 in Richtung des Antriebs 26 hinausragen. Die Abstützplatte 18 weist entsprechende Ausnehmungen auf, welche die Führungsstangen 20 wenigstens teilweise, bevorzugt komplett aufnehmen und lagern.

Wird das Werkzeug oder die Formschließeinheit 10 geöffnet, bewegen sich mittels des Antriebs 26 und der Kniehebelstränge 22, 24 die Antriebsplatte 16 und die bewegliche Formaufspannplatte 14 auf die Abstützplatte 18 zu, wobei die Führungsstangen 20 durch die Abstützplatte 18 tauchen.

In den Fig. 2, 4 und 7 ist die Maschine 100 mit einem geöffneten Werkzeug dargestellt. Beispielsweise ragen die Führungsstangen 20 in Fig. 2 länglich in Richtung des Antriebs 26 über die Abstützplatte 18 hinaus. Prinzipiell denkbar ist auch, dass die Führungsstangen 20 im geöffneten Zustand der Formschließeinheit 10 nicht durch die Abstützplatte 18 hinausragen.

Wird das Werkzeug oder die Formschließeinheit 10 wieder geschlossen, bewegen sich mittels des Antriebs 26 und der Kniehebelstränge 22, 24 die Antriebsplatte 16 und die bewegliche Formaufspannplatte 14 auf die erste Formaufspannplatte 12 zu, wobei die Führungsstangen 20 durch, jedoch nun in die andere Richtung als beim Öffnen der Formschließeinheit 10, die Abstützplatte 18 tauchen. Die Führungsstangen 20 bewegen sich praktisch aus der Abstützplatte 18 heraus in Richtung der ersten Formaufspannplatte 12.

Die Führungsstangen 20 verlaufen in den Fig. 1 bis 9 durch die Antriebsplatte 16 und sind wenigstens teilweise in der Antriebsplatte 16 und/oder in der Abstützplatte 18 gelagert. Die Führungsstangen 20 verlaufen z.B. in Figur 2 durch die Antriebsplatte 16 und die Abstützplatte 18 und sind dort ebenfalls gelagert. Im Zustand Werkzeug geschlossen (Fig. 1, 3, 5, 6, 8 und 9) verlaufen die Führungsstangen 20 wenigstens teilweise durch die Abstützplatte 18, während im Zustand Werkzeug geöffnet (Fig. 2, 4 und 7) die Führungsstangen 20 durch die Abstützplatte 18 tauchen und in Richtung des Antriebs 26 aus der Abstützplatte 18 herausragen.

Während des Öffnens und/oder Schließens der Formschließeinheit 10 weisen die Führungsstangen 20 und die bewegliche Formaufspannplatte 14 einerseits und die Antriebsplatte 16 andererseits wenigstens zeitweise ein gemeinsames Geschwindigkeitsprofil auf. Bei dem Geschwindigkeitsprofil handelt es sich um eine Überlagerung einer konstanten Bewegung des Antriebs 26, z.B. einer konstanten Spindelbewegung, mit der Kniehebelkinematik.

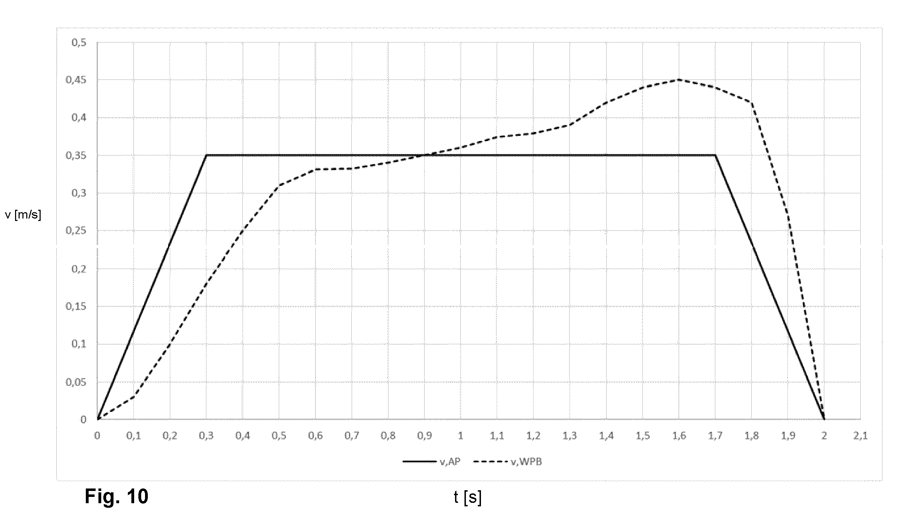

Das Diagramm gemäß Fig. 10 zeigt die Geschwindigkeitsprofile der Werkzeugplatte bzw. der beweglichen Formaufspannplatte 14 (gepunktete Linie) und der Antriebsplatte 16 (durchgezogene Linie). Da die beweglichen Formaufspannplatte 14 und die Führungsstangen 20 fest miteinander verbunden sind, ist das Geschwindigkeitsprofil der beweglichen Formaufspannplatte 14 auch das Geschwindigkeitsprofil der Führungsstangen 20. Die Abkürzung v,AP steht für die Geschwindigkeit der Antriebsplatte 16 (Kreuzkopf) und die Abkürzung v,WPB steht für die Geschwindigkeit der beweglichen Formaufspannplatte 14. Auf der X-Achse ist die Zeit t in sec aufgetragen und auf der Y-Achse ist die Geschwindigkeit v in m/sec aufgetragen.

Die Antriebsplatte 16 wird mit einem kontinuierlichen Geschwindigkeitsprofil (mit Plateau) von der Antriebseinheit bewegt. Aufgrund der Kniehebelkinematik und der dadurch entstehenden Übersetzung bewegen sich die bewegliche Formaufspannplatte 14 und die Antriebsplatte 16 in vorzugsweise genau einem Zeitpunkt (bei t=0,9sec) mit identischer Geschwindigkeit, d.h. die relative Geschwindigkeit zwischen den beiden Bauteilen ist an dieser Stelle Null. Grundsätzlich können sich die beiden Bauteile aber auch über einen bestimmten Zeitraum mit gleicher, also nahezu ähnlicher Geschwindigkeit bewegen.

Im Plateaubereich der Geschwindigkeit v,AP der Antriebsplatte 16 von ca. t=0,5sec bis ca. t=1,4sec sind die Geschwindigkeitsprofile der beiden Platten nahezu identisch. Damit ist die Relativbelastung für die Gleitlagerung zwischen der Führungsstange 20 (die sich ja mit der gleichen Geschwindigkeit wie die bewegliche Formaufspannplatte 14 bewegt, weil diese fest verbunden sind) und der Antriebsplatte 16 erheblich minimiert.

Während des Öffnens und/oder Schließens der Formschließeinheit 10 bewegen sich die Führungsstangen 20 und die bewegliche Formaufspannplatte 14 über wenigstens eine Zeitspanne mit der gleichen Geschwindigkeit wie die Antriebsplatte 16.

Für einen vorteilhaft verschleißfreien Betrieb der Formschließeinheit ist während des Öffnens und/oder Schließens der Formschließeinheit 10 über wenigstens eine Zeitspanne die Relativgeschwindigkeit zwischen der beweglichen Formaufspannplatte 14 und den Führungsstangen 20 einerseits und der Antriebsplatte andererseits 16 gleich Null. Durch den Antrieb 26 und über die Kniehebelstränge 22, 24 werden die Antriebsplatte 16 und die bewegliche Formaufspannplatte 14 bewegt. Die Bewegung der beweglichen Formaufspannplatte 14 folgt über die Kniehebelstränge 22, 24 der Bewegung der Antriebsplatte 16 (es liegt keine direkte Verbindung zwischen der Antriebsplatte 16 und der beweglichen Formaufspannplatte 14 vor - die Verbindung erfolgt über die Kniehebelstränge 22, 24), wobei über wenigstens eine Zeitspanne die Relativgeschwindigkeit zwischen der beweglichen Formaufspannplatte 14 und der Führungsstange 20 und der Antriebsplatte 16 gleich Null ist, wodurch sich vorteilhaft eine ressourcenschonende Lageranordnung ergibt.

Weiter ist während des Öffnens und/oder Schließens der Formschließeinheit 10 die Geschwindigkeit der Antriebsplatte 16 im Wesentlichen konstant. Lediglich eine kurze Zeit beim Beschleunigen und beim Abbremsen der Antriebsplatte 16 ändert sich die Geschwindigkeit der Antriebsplatte 16 während sie im Wesentlichen während des Öffnungs- und/oder Schließvorgangs der Formschließeinheit 10 im Wesentlichen konstant ist. Wird beispielsweise die Formschließeinheit 10 geöffnet, wird die Antriebsplatte 16 mittels des Antriebs 26 zum Beispiel in Figur 1 nach links bewegt, wobei nach einer bestimmten Zeit über die Kniehebelstränge 22, 24 die bewegliche Formaufspannplatte 14 in Bewegung gesetzt wird. Ab einem gewissen Zeitpunkt bewegen sich dann die Antriebsplatte 16 und die bewegliche Formaufspannplatte 14 über wenigstens eine Zeitspanne mit der gleichen konstanten Geschwindigkeit, bevor sich die Bewegung der Antriebsplatte 16 verlangsamt, sodass die Formschließeinheit 10 sich im geöffneten Werkzeugzustand (z.B. Figur 2) befindet.

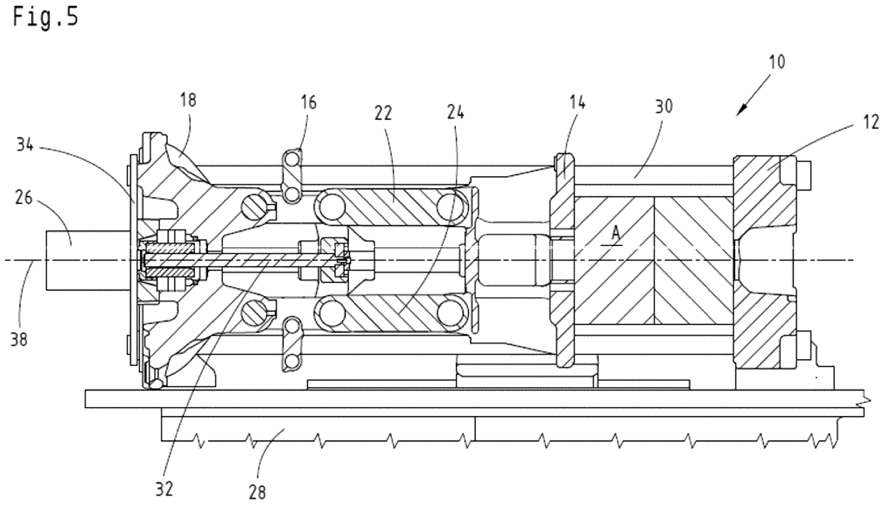

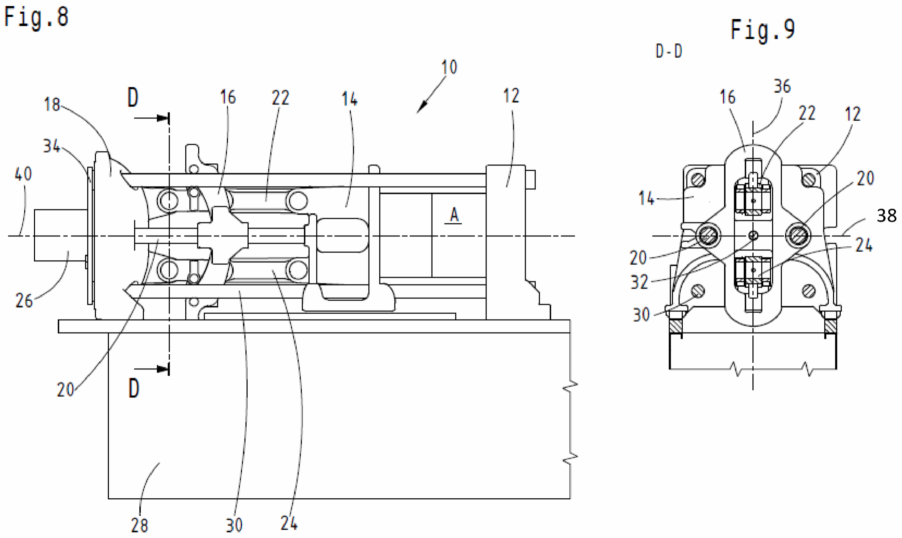

Die zwei Kniehebelstränge 22, 24 sind gemäß den Figuren 1 bis 9 mittig, in den Figuren 1 - 9 horizontal mittig, und vertikal symmetrisch an der beweglichen Formaufspannplatte 14 angreifend angeordnet. In Figur 5 ist z.B. ein vertikaler Schnitt durch die Maschinenlängsachse im Zustand Werkzeug geschlossen dargestellt. Die beiden Kniehebelstränge 22, 24 sind dort horizontal mittig, d.h. der Abstand nach "links" und "rechts" ist gleich (siehe auch Figur 9), und vertikal symmetrisch, d.h. im gleichen Abstand "oberhalb" und "unterhalb" der Symmetrieachse 38 bzw. der horizontalen Ebene durch die Symmetrieachse 38 befindet sich jeweils ein Kniehebelstrang 22, 24, an der beweglichen Formaufspannplatte 14 angreifend angeordnet. Weiter ist in Figur 5 dargestellt, dass die Kniehebelstränge 22, 24 ebenfalls mittig, bevorzugt horizontal mittig, und/oder vertikal symmetrisch an der Abstützplatte 18 angeordnet sind.

Gemäß den Figuren 1 - 9 sind genau zwei Kniehebelstränge 22, 24 vorgesehen, wobei die Kniehebelstränge 22, 24 horizontal mittig und vertikal symmetrisch in der oberen und unteren Hälfte der beweglichen Formaufspannplatte 14 angeordnet sind. Beispielsweise begrenzt in Figur 8 oder 9 die Achse 40 eine obere und eine untere Hälfte der beweglichen Foraufspannplatte 14. Die Kniehebelstränge 22, 24 sind dort im Wesentlichen horizontal mittig und vertikal symmetrisch in der oberen und unteren Hälfte der beweglichen Formaufspannplatte 14 angeordnet.

Gemäß den Figuren 1 - 4 sind die Kniehebelstränge 22, 24 in ihrer eigenen horizontalen und/oder vertikalen Ausgestaltung symmetrisch ausgeführt. Die Kniehebelstränge 22, 24 selbst sind beispielsweise in Figur 5 horizontal und vertikal symmetrisch ausgeführt. Dort erkennt man z.B. bzgl. des oberen Kniehebelstrangs 22, dass das Hebelelement auf der rechten Seite, welches an der beweglichen Formaufspannplatte 14 angreift, in der Mitte durchgeschnitten ist, und das Hebelelement auf der linken Seite, welche mit der Abstützplatte 18 verbunden ist, nicht durchgeschnitten ist, da es parallel zu der Schnittachse ein weiteres Hebelelement gibt.

In den Figuren 1 bis 9 sind genau zwei Führungsstangen 20 vorgesehen, welche vertikal mittig und horizontal symmetrisch an der beweglichen Formaufspannplatte 14 angeordnet sind. Beispielsweise sind in Figur 9 die Führungsstangen 20 vertikal in der Mitte entlang der Achse 40 und horizontal symmetrisch gegenüber der vertikalen Symmetrieachse 36 angeordnet, d.h. im gleichen Abstand links und rechts von der Symmetrieachse 36 befindet sich jeweils eine Führungsstange 20.

Weiter sind in den Figuren 1 - 9 zwei Kniehebelstränge 22, 24 und zwei Führungsstangen 20 vorgesehen, welche an der beweglichen Formaufspannplatte 14, der Abstützplatte 18 und/oder der Antriebsplatte 16 im rechten Winkel zueinander angeordnet sind. Verbindet man beispielsweise in Figur 9 die Anordnungspunkte der Kniehebelstränge 22, 24 miteinander, was in einer Verbindung entlang der Symmetrieachse 36 resultiert, sowie die Anordnungspunkte der Führungsstangen 20 miteinander, was in einer Verbindung entlang der Achse 40 resultiert, schneiden sich die Verbindungen bzw. die Symmetrieachse 36 und die Achse 40 in einem rechten Winkel.

In einem weiteren bevorzugten Ausführungsbeispiel weisen die zwei Führungsstangen 20 den kleinstmöglichen Abstand der Führungsstangen 20 zum Zentrum der Antriebsplatte 16 auf, wodurch sich klare Vorteile hinsichtlich des thermischen Wachstums ergeben, da das thermische Wachstum proportional zur Temperaturerhöhung und dem Abstand ist. Der Abstand der Führungsstangen 20 wurde geometrisch so klein wie möglich gestaltet, um das thermische Wachstum vorteilhaft klein zu halten.

In einem weiteren Ausführungsbeispiel ist die wenigstens eine Führungsstange 20 Teil einer Schließhubsicherung. Die Schließhubsicherung kann beispielsweise als eine Rammstange ausgeführt sein. Sind beispielsweise zwei Führungsstangen 20 vorgesehen ist es denkbar, dass jede Führungsstange 20 als Rammstange einer Schließhubsicherung ausgeführt ist.

### Bezugszeichenliste

- 10: Formschließeinheit
- 12: erste Formaufspannplatte
- 14: bewegliche Formaufspannplatte
- 16: Antriebsplatte
- 18: Abstützplatte
- 20: Führungsstange
- 22: Kniehebelstrang
- 24: Kniehebelstrang
- 26: Antrieb
- 28: Maschinenständer
- 30: Holm
- 32: Antriebsstange
- 34: Formhöhenverstellung
- 36: Symmetrieachse
- 38: Symmetrieachse
- 40: Achse
- 100: Maschine
- A: Werkzeugraum
- D-D: Achse

### Bezugszeichenliste

- 10: Formschließeinheit
- 12: erste Formaufspannplatte
- 14: bewegliche Formaufspannplatte
- 16: Antriebsplatte
- 18: Abstützplatte
- 20: Führungsstange
- 22: Kniehebelstrang
- 24: Kniehebelstrang
- 26: Antrieb
- 28: Maschinenständer
- 30: Holm
- 32: Antriebsstange
- 34: Formhöhenverstellung
- 36: Symmetrieachse
- 38: Symmetrieachse
- 40: Achse
- 100: Maschine
- A: Werkzeugraum
- D-D: Achse

## Patentansprüche

1. Formschließeinheit (10) für eine Maschine (100) zur Verarbeitung von Kunststoffen und anderer plastifizierbarer Massen, insbesondere für eine Spritzgießmaschine, aufweisend eine erste Formaufspannplatte (12), eine Abstützplatte (18), eine bewegliche Formaufspannplatte (14) und eine Antriebsplatte (16),
- wobei die Antriebsplatte (16) zwischen der beweglichen Formaufspannplatte (14) und der Abstützplatte (18) angeordnet ist,
- wobei mehrere Kniehebelstränge (22, 24) mit der Abstützplatte (18), der Antriebsplatte (16) und der beweglichen Formaufspannplatte (14) verbunden sind und sich an der Abstützplatte (18) abstützen und
- wobei wenigstens eine Führungsstange (20) mit der beweglichen Formaufspannplatte (14) verbunden ist und relativ bewegbar zu der Abstützplatte (18) ist und
- wobei die Abstützplatte (18) wenigstens eine Ausnehmung für die wenigstens eine Führungsstange (20) aufweist und die wenigstens eine Führungsstange (20) beim Öffnen und/oder Schließen der Formschließeinheit (10) wenigstens teilweise durch die Abstützplatte (18) taucht,
**dadurch gekennzeichnet, dass** die Kniehebelstränge (22, 24) beim Öffnen der Formschließeinheit (10) nach außen über Holme (30) der Formschließeinheit hinaus klappende Kniehebelstränge (22, 24) sind, die hinsichtlich ihrer Anlenkung innerhalb eines durch die Holme (30) begrenzten Raums und von den Grenzen des Raums beabstandet nach innen in Richtung auf eine Maschinen-Mittelachse (Achse 40) angeordnet sind,
dass die Kniehebelstränge (22, 24) zwischen sich einen Freiraum ausbilden,
dass die Kniehebel der Kniehebelstränge (22, 24) in Strecklage horizontal ausgerichtet sind und
dass die wenigstens eine Führungsstange (20) durch die Antriebsplatte (16) verläuft und wenigstens teilweise in der Antriebsplatte (16) und/oder in der Abstützplatte (18) gelagert ist.

2. Formschließeinheit nach einem der vorhergehenden Ansprüche, **dadurch gekennzeichnet, dass** sich während des Öffnens und/oder Schließens der Formschließeinheit (10) die wenigstens eine Führungsstange (20) und die bewegliche Formaufspannplatte (14) über wenigstens eine Zeitspanne mit einer gleichen oder mit einer zumindest zu einem Zeitpunkt identischen Geschwindigkeit wie die Antriebsplatte (16) bewegen.

3. Formschließeinheit nach einem der vorhergehenden Ansprüche, **dadurch gekennzeichnet, dass** während des Öffnens und/oder Schließens der Formschließeinheit (10) die Geschwindigkeit der Antriebsplatte (16) über wenigstens eine Zeitspanne im Wesentlichen konstant ist.

4. Formschließeinheit nach einem der vorhergehenden Ansprüche, **dadurch gekennzeichnet, dass** die Kniehebelstränge (22, 24) mit jeweils einem Ende mittig, bevorzugt horizontal mittig, und/oder vertikal symmetrisch an der beweglichen Formaufspannplatte (14) angreifend angeordnet sind.

5. Formschließeinheit nach Anspruch 4, **dadurch gekennzeichnet, dass** die an der beweglichen Formaufspannplatte (14) angreifend angeordneten Enden der Kniehebelstränge (22, 24) verschiebbar sind.

6. Formschließeinheit nach einem der vorhergehenden Ansprüche, **dadurch gekennzeichnet, dass** wenigstens zwei Führungsstangen (20) vorgesehen sind, welche vorzugsweise mittig, bevorzugt vertikal mittig, und/oder horizontal symmetrisch an der beweglichen Formaufspannplatte (14) angeordnet sind.

7. Formschließeinheit nach einem der vorhergehenden Ansprüche, **dadurch gekennzeichnet, dass** die wenigstens eine Führungsstange (20) Teil einer Schließhubsicherung ist.

8. Formschließeinheit nach einem der vorhergehenden Ansprüche, **dadurch gekennzeichnet, dass** die Kniehebelstränge (22, 24) und wenigstens zwei Führungsstangen (20) vorgesehen sind, welche an der beweglichen Formaufspannplatte (14), der Abstützplatte (18) und/oder der Antriebsplatte (16) im rechten Winkel zueinander angeordnet sind.

9. Verfahren zum Betreiben einer Formschließeinheit (10) für eine Maschine (100) zur Verarbeitung von Kunststoffen und anderer plastifizierbarer Massen, insbesondere für eine Spritzgießmaschine, aufweisend eine erste Formaufspannplatte (12), eine Abstützplatte (18), eine bewegliche Formaufspannplatte (14) und eine Antriebsplatte (16),
- wobei die Antriebsplatte (16) zwischen der beweglichen Formaufspannplatte (14) und der Abstützplatte (18) angeordnet ist,
- wobei mehrere Kniehebelstränge (22, 24) mit der Abstützplatte (18), der Antriebsplatte (16) und der beweglichen Formaufspannplatte (14) verbunden sind und sich an der Abstützplatte (18) abstützen und
- wobei wenigstens eine Führungsstange (20) mit der beweglichen Formaufspannplatte (14) verbunden ist und beim Öffnen und/oder Schließen der Formschließeinheit (10) relativ zu der Abstützplatte (18) bewegt und wenigstens teilweise durch die Abstützplatte (18) getaucht wird,
**dadurch gekennzeichnet, dass** die Kniehebelstränge (22, 24) bei ihrem Zusammenklappen und beim Öffnen der Formschließeinheit (10) nach außen über Holme (30) der Formschließeinheit hinaus klappen und die bewegliche Formaufspannplatte (14) von den Kniehebelsträngen (22, 24) innerhalb eines durch die Holme (30) begrenzten Raums und von den Grenzen des Raums beabstandet nach innen in Richtung auf eine Maschinen-Mittelachse (Achse 40) betätigt wird,
wobei die Kniehebelstränge (22, 24) zwischen sich einen Freiraum ausbilden und
die Kniehebel der Kniehebelstränge (22, 24) in Strecklage horizontal ausgerichtet sind und wobei die wenigstens eine Führungsstange (20) durch die Antriebsplatte (16) verläuft und wenigstens teilweise in der Antriebsplatte (16) und/oder in der Abstützplatte (18) gelagert wird.

10. Verfahren nach Anspruch 9, **dadurch gekennzeichnet, dass** während des Öffnens und/oder Schließens der Formschließeinheit (10) die wenigstens eine Führungsstange (20) und die bewegliche Formaufspannplatte (14) über wenigstens eine Zeitspanne mit der gleichen Geschwindigkeit wie die Antriebsplatte (16) bewegt werden.

11. Verfahren nach Anspruch 9 oder 10, **dadurch gekennzeichnet, dass** während des Öffnens und/oder Schließens der Formschließeinheit (10) die Antriebsplatte (16) über wenigstens eine Zeitspanne mit einer im Wesentlichen konstanten Geschwindigkeit bewegt wird.

## Claims

1. Mold closing unit (10) for a machine (100) for processing plastics and other plasticizable materials, in particular for an injection molding machine, comprising a first mold platen (12), a support plate (18), a movable mold platen (14), and a drive plate (16),
- wherein the drive plate (16) is arranged between the movable mold platen (14) and the support plate (18),
- wherein a plurality of toggle linkages (22, 24) are connected to the support plate (18), the drive plate (16) and the movable mold platen (14) and are supported against the support plate (18), and
- wherein at least one guide rod (20) is connected to the movable mold platen (14) and is movable relative to the support plate (18), and
- wherein the support plate (18) has at least one recess for the at least one guide rod (20) and, during opening and/or closing of the mold closing unit (10), the at least one guide rod (20) penetrates at least partly through the support plate (18),
**characterized in that** the toggle linkages (22, 24) are toggle linkages (22, 24) which, when the mold closing unit (10) is opened, hinge outward beyond tie bars (30) of the mold closing unit and which, as regards their articulation, are arranged within a space delimited by the tie bars (30) and at a spacing from the limits of the space, inward in the direction of a machine center axis (axis 40),
**in that** the toggle linkages (22, 24) form between them a free space,
**in that** the toggle levers of the toggle linkages (22, 24) are oriented horizontally in the extended position, and
**in that** the at least one guide rod (20) runs through the drive plate (16) and is at least partly mounted in the drive plate (16) and/or the support plate (18).

2. Mold closing unit as claimed in one of the preceding claims, **characterized in that** during the opening and/or the closing of the mold closing unit (10) the at least one guide rod (20) and the movable mold platen (14) move, over at least a period of time, at the same speed as the drive plate (16), or at a speed that is identical to it at least at one point in time.

3. Mold closing unit as claimed in one of the preceding claims, **characterized in that** during the opening and/or the closing of the mold closing unit (10) the speed of the drive plate (16) is substantially constant over at least a period of time.

4. Mold closing unit as claimed in one of the preceding claims, **characterized in that** the toggle linkages (22, 24) are each arranged with one end acting centrally, preferably horizontally centrally, and/or vertically symmetrically on the movable mold platen (14).

5. Mold closing unit as claimed in claim 4, **characterized in that** the ends of the toggle linkages (22, 24) that are arranged to act on the movable mold platen (14) are displaceable.

6. Mold closing unit as claimed in one of the preceding claims, **characterized in that** at least two guide rods (20) are provided that are preferably arranged centrally, preferably vertically centrally, and/or horizontally symmetrically on the movable mold platen (14).

7. Mold closing unit as claimed in one of the preceding claims, **characterized in that** the at least one guide rod (20) is part of a closing stroke safety mechanism.

8. Mold closing unit as claimed in one of the preceding claims, **characterized in that** the toggle linkages (22, 24) and at least two guide rods (20) are provided and are arranged at a right angle to one another on the movable mold platen (14), the support plate (18) and/or the drive plate (16).

9. Method for operating a mold closing unit (10) for a machine (100) for processing plastics and other plasticizable materials, in particular for an injection molding machine, comprising a first mold platen (12), a support plate (18), a movable mold platen (14), and a drive plate (16),
- wherein the drive plate (16) is arranged between the movable mold platen (14) and the support plate (18),
- wherein a plurality of toggle linkages (22, 24) are connected to the support plate (18), the drive plate (16) and the movable mold platen (14) and are supported against the support plate (18), and
- wherein at least one guide rod (20) is connected to the movable mold platen (14) and, during opening and/or closing of the mold closing unit (10), moves relative to the support plate (18) and at least partly is penetrated through the support plate (18),
**characterized in that**, when the toggle linkages are hinged closed and the mold closing unit (10) is opened, the toggle linkages (22, 24) hinge outward beyond tie bars (30) of the mold closing unit and the movable mold platen (14) is actuated by the toggle linkages (22, 24) within a space delimited by the tie bars (30) and at a spacing from the limits of the space, inward in the direction of a machine center axis (axis 40),
wherein the toggle linkages (22, 24) form between them a free space, and wherein the toggle levers of the toggle linkages (22, 24) are oriented horizontally in the extended position, and
wherein the at least one guide rod (20) runs through the drive plate (16) and is at least partly mounted in at least one of the drive plate (16) or the support plate (18).

10. Method as claimed in claim 9, **characterized in that** during the opening and/or the closing of the mold closing unit (10) the at least one guide rod (20) and the movable mold platen (14) are moved, over at least a period of time, at the same speed as the drive plate (16).

11. Method as claimed in claim 9 or 10, **characterized in that** during the opening and/or the closing of the mold closing unit (10) the drive plate (16) is moved, over at least a period of time, at a substantially constant speed.

## Revendications

1. Unité de fermeture de moule (10) pour une machine (100) pour la transformation de matières plastiques et d'autres masses plastifiables, en particulier pour une machine de moulage par injection, comprenant une première plaque de fixation de moule (12), une plaque d'appui (18), une plaque de fixation de moule mobile (14) et une plaque d'entraînement (16),
- la plaque d'entraînement (16) étant disposée entre la plaque de fixation de moule mobile (14) et la plaque d'appui (18),
- plusieurs barres de genouillère (22, 24) étant reliées avec la plaque d'appui (18), la plaque d'entraînement (16) et la plaque de fixation de moule mobile (14) et s'appuyant sur la plaque d'appui (18) et
- au moins une tige de guidage (20) étant reliée avec la plaque de fixation de moule mobile (14) et étant mobile par rapport à la plaque d'appui (18) et
- la plaque d'appui (18) présentant au moins une ouverture pour la ou les tiges de guidage (20) et la ou les tiges de guidage (20) plongeant au moins partiellement à travers la plaque d'appui (18) lors de l'ouverture et/ou la fermeture de l'unité de fermeture de moule (10),
**caractérisée en ce que** les barres de genouillère (22, 24) sont des barres de genouillère (22, 24) qui, lors de l'ouverture de l'unité de fermeture de moule (10), se rabattent vers l'extérieur au-dessus de barres (30) de l'unité de fermeture de moule et qui, en ce qui concerne leur l'articulation à l'intérieur d'un espace limité par les barres (30) et espacé des limites de cet espace, sont disposées vers l'intérieur dans la direction d'un axe central de la machine (axe 40),
**en ce que** les barres de genouillère (22, 24) forment entre elles un espace libre,
**en ce que** les genouillères des barres de genouillère (22, 24) sont alignées horizontalement en position d'étirement et
**en ce qu'**au moins une tige de guidage (20) s'étend à travers la plaque d'entraînement (16) et est logée au moins partiellement dans la plaque d'entraînement (16) et/ou dans la plaque d'appui (18).

2. Unité de fermeture de moule selon l'une des revendications précédentes, **caractérisée en ce que** pendant l'ouverture et/ou la fermeture de l'unité de fermeture ce moule (10), la ou les tiges de guidage (20) et la plaque de fixation de moule mobile (14) se déplacent pendant au moins un laps de temps à la même vitesse, ou à un certain moment à la même vitesse que la plaque d'entraînement (16).

3. Unité de fermeture de moule selon l'une des revendications précédentes, **caractérisée en ce que** pendant l'ouverture et/ou la fermeture de l'unité de fermeture de moule (10), la vitesse de la plaque d'entraînement (16) est sensiblement constante pendant au moins un laps de temps.

4. Unité de fermeture de moule selon l'une des revendications précédentes, **caractérisée en ce que** les barres de genouillère (22, 24) sont disposées à chaque fois en prise avec une extrémité au milieu, de préférence horizontalement au milieu et/ou symétriquement par rapport à la verticale, sur la plaque de fixation de moule mobile (14).

5. Unité de fermeture de moule selon la revendication 4, **caractérisée en ce que** les extrémités des barres de genouillère (22, 24) disposées en prise avec la plaque de fixation de moule mobile (14) sont déplaçables.

6. Unité de fermeture de moule selon l'une des revendications précédentes, **caractérisée en ce qu'**au moins deux tiges de guidage (20) sont prévues, lesquelles sont disposées de préférence au milieu, de préférence verticalement au milieu et/ou symétriquement par rapport à l'horizontale, sur la plaque de fixation de moule mobile (14).

7. Unité de fermeture de moule selon l'une des revendications précédentes, **caractérisée en ce que** la ou les tiges de guidage (20) fait(font) partie d'une sécurité anti-retour.

8. Unité de fermeture de moule selon l'une des revendications précédentes, **caractérisée en ce que** les barres de genouillère (22, 24) et les au moins deux tiges de guidage (20) sont prévues, lesquelles sont disposées sur les plaques de fixation de moule mobile (14), la plaque d'appui (18) et/ou la plaque d'entraînement (16) étant disposées en angle droit l'une par rapport à l'autre.

9. Procédé de mise en œuvre de l'unité de fermeture de moule (10) pour une machine (100) pour la transformation de matières plastiques et d'autres masses plastifiables, en particulier une machine de moulage par injection, comprenant une première plaque de fixation de moule (12), une plaque d'appui (18), une plaque de fixation de moule mobile (14) et une plaque d'entraînement (16),
- la plaque d'entraînement (16) étant disposée entre la plaque de fixation de moule mobile (14) et la plaque d'appui (18),
- plusieurs barres de genouillère (22, 24) étant reliées avec la plaque d'appui (18), la plaque d'entraînement (16) et la plaque de fixation de moule mobile (14) et s'appuyant sur la plaque d'appui (18) et
- au moins une tige de guidage (20) étant reliée avec la plaque de fixation de moule mobile (14) et étant déplacée par rapport à la plaque d'appui (18) lors de l'ouverture et/ou la fermeture de l'unité de fermeture de moule (10) et plongeant au moins partiellement à travers la plaque d'appui (18),
**caractérisé en ce que** les barres de genouillère (22, 24) lors de leur rabattement ensemble et lors de l'ouverture de l'unité de fermeture de moule (10) se rabattent vers l'extérieur au-dessus de barres (30) de l'unité de fermeture de moule et la plaque de fixation de moule mobile (14) est espacée des barres de genouillère (22, 24) à l'intérieur d'un espace limité par les bras (30), ainsi que des limites de cet espace et est actionnée vers l'intérieur en direction d'un axe central de la machine (axe 40),
les barres de genouillère (22, 24) formant entre elles un espace libre et les genouillères des barres de genouillère (22, 24) étant alignées horizontalement en position d'étirement et la ou les tiges de guidage (20) s'étendant à travers la plaque d'entraînement (16) et étant logée(s) au moins partiellement dans la plaque d'entraînement (16) et/ou dans la plaque d'appui (18).

10. Procédé selon la revendication 9, **caractérisé en ce que** durant l'ouverture et/ou la fermeture de l'unité de fermeture de moule (10), la ou les tiges de guidage (20) et la plaque de fermeture de moule mobile (14) sont déplacées au moins pendant un laps de temps à la même vitesse que la plaque d'entraînement (16).

11. Procédé selon la revendication 9 ou la revendication 10, **caractérisé en ce que** durant l'ouverture et/ou la fermeture de l'unité de fermeture de moule (10), la plaque d'entraînement (16) est déplacée pendant au moins un laps de temps à une vitesse sensiblement constante.
